# EUROPEAN PATENT APPLICATION

(11) **EP 2 837 291 A1**
(43) Date of publication of application: **18.02.2015**
(21) Application number: 13775386.9
(22) Date of filing: 11.04.2013
(51) Int. Cl.: A23L 1/16

(54) **GROOVED NOODLE**

(30) Priority: 11.04.2012 JP 2012089930
(71) Applicant: Nisshin Foods Inc., Tokyo 101-8441 (JP)
(72) Inventor: YONEYAMA, Kazuyoshi, Tokyo 103-8544 (JP); KAJIO, Fusaki, Tokyo 103-8544 (JP); ITOH, Makoto, Tokyo 103-8544 (JP); KIMURA, Ryusuke, Tokyo 103-8544 (JP)
(74) Representative: Casalonga
(86) International application number: PCT/JP2013/060917
(87) International publication number: WO 2013/154152

(57) **Abstract**

Of this grooved noodle, a cross section of the noodle line has a parallelogram or rectangular primary contour and has two grooves along the noodle line direction at positions that are point-symmetric around the center of the cross section of the noodle line. In the cross section of the noodle line, each groove has: a pair of first sides facing each other and extending towards the inside of the noodle line from a groove opening surface; and a pair of second sides that form the groove tip section, are connected to each other, and bend in a direction approaching each other at the tips of the first sides. The distance from the tip section of the grooves to the opening surface is greater than 1/2 width of the noodle line in the direction of formation of the grooves in the cross section of the noodle line.

## Description

### TECHNICAL FIELD

The present invention relates to a grooved noodle and particularly to a noodle in which two grooves are formed along a noodle string direction.

### BACKGROUND ART

Conventionally, there has been proposed a noodle having a slit or a groove along a noodle string direction for the purpose of achieving a shortened cooking time, e.g., a shortened boiling time. For example, Patent Literature 1 discloses a noodle having four wedge-shaped grooves with a depth not reaching the center of the substantially-circular cross section of the noodle string, and another noodle having a single wedge-shaped or rectangular-shaped groove with a depth reaching the center of the substantially-circular cross section of the noodle string.

The noodle having wedge-shaped grooves with a depth not reaching the center of the noodle string can certainly shorten the cooking time as compared with a noodle without grooves but fails to significantly reduce the cooking time because such shallow grooves did not assist in quickly conducting heat to the inside of the noodle during cooking. The noodle formed with a wedge-shaped or rectangular-shaped groove with a depth reaching the center of the noodle string achieves shortening of the cooking time to about a half at a maximum as compared with a noodle without grooves but then is difficult to cook in such a way that the noodle gives a good texture with al dente firmness because the center of the noodle string is boiled too quickly.

Meanwhile, Patent literature 2 proposes a grooved noodle having a pair of V-shaped, U-shaped or rectangular-shaped grooves along a noodle string having a parallelogrammic cross section, the pair of grooves extending from opposite vertexes positioned across a diagonal of the parallelogram toward the diagonal to be perpendicular thereto. Patent Literature 2 describes that the grooved noodle can give a good texture with a short cooking time as well as achieving a good external appearance since the grooves are closed after cooking.

### CITATION LIST

### PATENT LITERATURE

Patent Literature 1: JP 60-6172 A
Patent Literature 2: JP 2807536 B

### SUMMARY OF INVENTION

### TECHNICAL PROBLEMS

However, in the grooved noodle disclosed by Patent Literature 2, when the grooves have a V-shaped cross section and opening portions of the grooves are small in size, the grooves are to be closed too quickly upon cooking and this prevents heat from being conducted to the inside of the noodle. In contrast, when the opening portions of the grooves are large in size, the grooves are not fully closed after cooking and this may lead to a poor external appearance, or this may result in a poor texture because the center area of the noodle string is boiled too quickly.

When the grooves have a U-shaped or rectangular-shaped cross section, the grooves may not be fully closed even after the noodle is completely boiled, or the inner portions of the grooves may not be closed even though the opening portions thereof are closed so that voids occur inside the noodle, thereby impairing a texture of the noodle.

The present invention is made to overcome the above problems of the prior art and has an object of providing a grooved noodle which can achieve the reduction in cooking time as well as an excellent texture and an excellent external appearance after cooking.

### SOLUTION TO PROBLEMS

In a grooved noodle according to the present invention, a cross section of a noodle string has a parallelogrammic or rectangular basic contour;
wherein two grooves extending along a direction of the noodle string are provided at symmetrical positions with respect to a center of the cross section of the noodle string;
wherein in the cross section of the noodle string, each of the two grooves has a pair of first sides that face each other and extend from an opening plane of each of the two grooves toward an inside of the noodle string, and a pair of second sides that respectively extend from ends of the pair of first sides in bending directions so as to come closer to each other and are interconnected to form a terminal end of each of the two grooves; and
wherein in the cross section of the noodle string, a distance from the terminal end to the opening plane of each of the two grooves is larger than 1/2 of a width of the noodle string in a grooving direction.

Preferably, in the cross section of the noodle string, a ratio of a thickness of the noodle string at a portion between the two grooves to an opening width of each of the two grooves is 1.0:0.7 to 1.3.

In the cross section of the noodle string, an angle of the terminal end of each of the two grooves may be 45 to 100 degrees. In this case, it is preferable that in the cross section of the noodle string, a bending angle between each of the pair of first sides and a corresponding one of the pair of second sides is 110 to 170 degrees.

Preferably, in the cross section of the noodle string, a total area of the two grooves is 15 to 65% of an area of the basic contour of the noodle string given that the two grooves are not present.

Also, preferably, a thickness of the noodle string is 0.3 mm to 1.5 mm in a portion covering about 80% of a constituent area from the center of the cross section of the noodle string.

In the cross section of the noodle string, the two grooves respectively may extend from opposite corners of the basic contour of the noodle string toward the inside of the noodle string. Otherwise, in the cross section of the noodle string, the two grooves respectively may extend from opposite sides of the basic contour of the noodle string toward the inside of the noodle string.

In the cross section of the noodle string, the pair of first sides of each of the two grooves may be inclined such that an interval between the pair of first sides narrows at a side closer to the terminal end, or may extend in parallel with each other.

### ADVANTAGEOUS EFFECTS OF INVENTION

According to the present invention, in the cross section of a noodle string, each groove has a pair of first sides that face to each other and extend from an opening plane of the relevant groove toward the inside of the noodle string and a pair of second sides that are respectively connected with ends of the first sides to extend in bending directions so as to come closer to each other and that are interconnected to form a terminal end of the relevant groove. Therefore, it is possible to achieve the reduction in cooking time as well as an excellent texture and an excellent external appearance after cooking.

### BRIEF DESCRIPTION OF DRAWINGS

[FIG. 1] FIG. 1 is a perspective view illustrating a part of a grooved noodle according to Embodiment 1 of the invention.
[FIG. 2] FIG. 2 is a cross sectional view illustrating the grooved noodle according to Embodiment 1.
[FIG. 3] FIG. 3 is a diagram illustrating cutting blades for use in manufacturing the grooved noodle according to Embodiment 1.
[FIG. 4] FIG. 4 is an enlarged view of a principal part of the cutting blades of FIG. 3.
[FIG. 5] FIG. 5 is a cross sectional view illustrating an alternative example of the grooved noodle of Embodiment 1.
[FIG. 6] FIG. 6 is a cross sectional view illustrating the grooved noodle according to Embodiment 2.
[FIG. 7] FIG. 7 is a cross sectional view illustrating an alternative example of the grooved noodle of Embodiment 2.
[FIG. 8] FIG. 8 is a cross sectional view illustrating the grooved noodle according to Embodiment 3.
[FIG. 9] FIG. 9 is a cross sectional view illustrating an alternative example of the grooved noodle of Embodiment 3.

### DESCRIPTION OF EMBODIMENTS

The present invention is described in detail below based on the preferred embodiments illustrated in the accompanying drawings.

### Embodiment 1

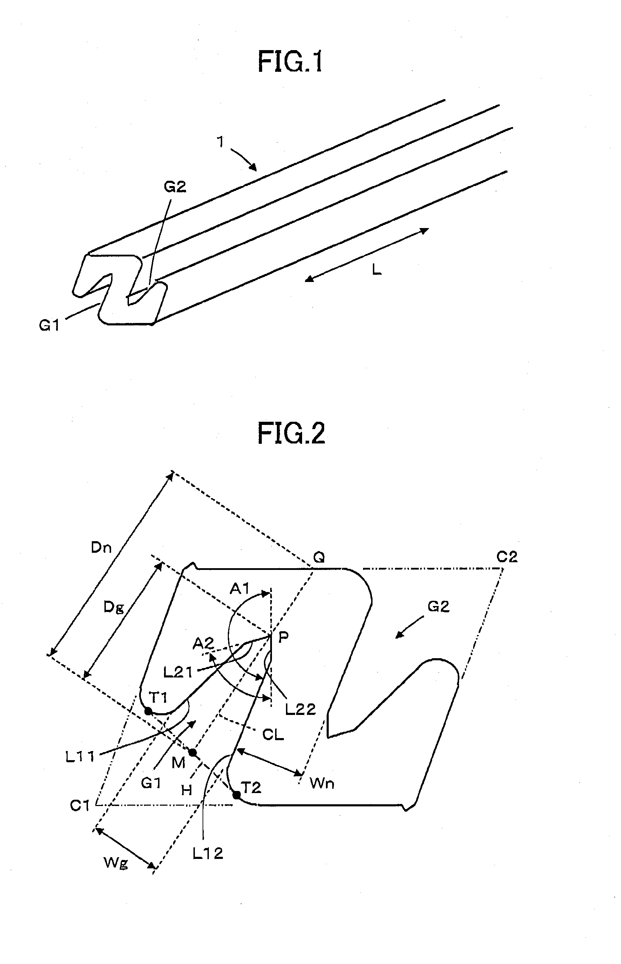

FIG. 1 shows a grooved noodle 1 according to Embodiment 1 of the present invention. The noodle 1 is a dry noodle extending in a noodle string direction indicated by L in the drawing. The noodle 1 has two grooves G1 and G2 extending along the noodle string direction L in its peripheral part.

As shown in FIG. 2, the noodle string has the basic contour of substantially-parallelogrammic shape in cross section. That is, supposing that the two grooves G1 and G2 are not present, the noodle 1 has a substantially-parallelogrammic shape in cross section. The grooves G1 and G2 respectively extend from opposite corners C1 and C2 of the parallelogram of the basic contour of the noodle string toward the inside of the noodle string and are at symmetrical positions with respect to the center point of the parallelogram.

The grooves G1 and G2 have the same cross-sectional shape in the cross section of the noodle string, and each of the grooves has a pair of first sides L11 and L12 of linear shape extending from an opening plane H of the groove toward the inside of the noodle string and a pair of second sides L21 and L22 of linear shape respectively connected with ends of the first sides L11 and L12. The first sides L11 and L12 facing each other extend while being inclined to each other so that an interval therebetween narrows at a side closer to a terminal end P of the groove, and the ends of the first sides L11 and L12 are connected with the second sides L21 and L22, respectively. The second sides L21 and L22 extend from the ends of the first sides L11 and L12 in bending directions so as to come closer to each other, and an intersection between the second sides L21 and L22 forms the terminal end P of the groove.

In other words, the grooves G1 and G2 have a polygonal shape in cross section in which the inclination angle varies in two steps, unlike the V-shaped, U-shaped or rectangular-shaped groove in Patent Literatures 1 and 2 described above.

The opening plane H of each of the grooves G1 and G2 is defined herein as a plane that is positioned between contact points T1 and T2 with the noodle string portion and that is in contact with the noodle string portion at both sides of the relevant groove so as to cover the opening of the groove. In the cross section of the noodle string, when an intersection between a centerline CL and the opening plane H of each of the grooves is denoted by M and a distance Dg from the intersection M to the terminal end P of the groove is the depth of the groove, the depth of each of the grooves G1 and G2 is set to be larger than 1/2 of the width of the noodle string in a groove-formed direction. When an intersection between an extension line of the centerline CL of the groove and the outline of the noodle string is denoted by Q, the width of the noodle string in the groove-formed direction is represented by a distance Dn from the intersection M between the centerline CL of the groove and the opening plane H to the intersection Q. That is, the grooves G1 and G2 are each formed to extend to a deeper position than the midpoint of a line segment MQ connecting the points M and Q in the groove-formed direction.

When the grooved noodle 1 having the foregoing structure is placed in water of high temperature and boiled, water and heat penetrate inside the noodle string through the outer peripheral surface thereof, while water of high-temperature enters the two grooves G1 and G2, so that water and heat penetrate inside the noodle string from, in addition to the outer peripheral surface of the noodle string, inner walls of the two grooves G1 and G2. As described above, each of the grooves G1 and G2 has the first sides L11 and L12 as well as the second sides L21 and L22 respectively extending from the ends of the sides L11 and L12 in bending directions to the terminal end P, and also has a depth larger than 1/2 of the width of the noodle string in the groove-formed direction, thus having a large surface area. Consequently, water and heat are efficiently and quickly absorbed into the noodle string.

In this case, the grooves G1 and G2 have a polygonal shape in cross section in which the inclination angle varies in two steps due to the first sides L11 and L12 and the second sides L21 and L22. Therefore, as compared to a simple V-shaped groove having the same opening width and depth as those of the grooves G1 and G2, closing behavior of the grooves is not accelerated, and water and heat penetrate inside the noodle string more sufficiently owing to hot water having entered the inside of the grooves G1 and G2, whereby the noodle is quickly boiled. In addition, as compared to a U-shaped or rectangular-shaped groove having the same opening width and depth as those of the grooves G1 and G2, the grooves G1 and G2 are closed more easily, so that the noodle can avoid having a groove which remains without being fully closed or occurrence of voids inside the noodle after cooking.

Thus, it is possible to achieve an excellent texture, as well as an external appearance and a feeling on the tongue similar to those of a noodle without grooves, after cooking even with a short cooking time.

The ratio of a thickness Wn of the noodle string at a portion between the two grooves G1 and G2 to a groove opening width Wg is preferably set to 1.0:0.7 to 1.0:1.3, where the largest interval between the first sides L11 and L12 as measured in a direction perpendicular to the centerline CL of the groove, i.e., a distance between the first sides L11 and L12 at a side closer to the opening of the groove is the groove opening width Wg. With this configuration, the grooves G1 and G2 fully closed after cooking and the reduction in cooking time can be both achieved.

It is preferable that a bending angle between the first side L11 and the second side L21 and a bending angle A1 between the first side L12 and the second side L22 be each set to fall in a range of 110 to 170 degrees, and that an angle A2 between the second sides L21 and L22 at the terminal end P be set to fall in a range of 45 to 100 degrees. This configuration enables the grooves G1 and G2 to be not too quickly closed and at the same time, be fully closed.

In the cross section of the noodle string, assuming that the cross-sectional area of the interior portion of the groove as closed by the opening plane H of the groove is the area of the groove, the sum of areas of the two grooves G1 and G2 is preferably 15 to 65% of the area of the basic contour of the noodle string given that the grooves G1 and G2 are not present.

Furthermore, in the cross-sectional shape of the noodle string, it is preferable that the length of each side of the parallelogram which is the basic contour of the noodle string be set to 1 to 6 mm and that the thickness of the noodle string be 0.3 mm to 1.5 mm at a portion greatly influencing the noodle strength in the manufacture, for instance, in a portion covering about 80% of the constituent area from the center of the parallelogram of the basic contour of the noodle string.

The grooved noodle 1 having the forgoing structure makes it possible to achieve the reduction in cooking time as well as an excellent texture and an excellent external appearance after cooking.

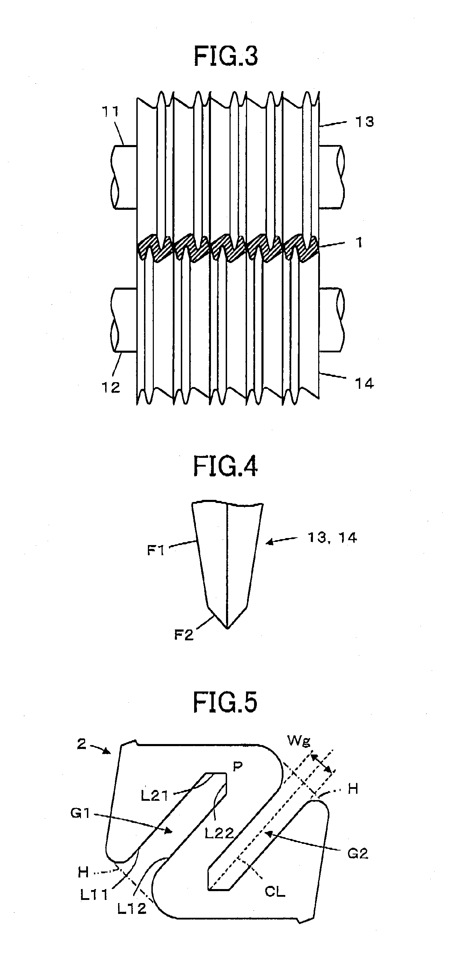

The grooved noodle 1 of Embodiment 1 can be manufactured using, for example, cutting blades as shown in FIG. 3. Plural, disc-shaped, cutting blades 13 and plural, disc-shaped, cutting blades 14 are respectively attached on a pair of rotary shafts 11 and 12, and the rotary shafts 11 and 12 are disposed in parallel with each other so that edges of their cutting blades 13 and 14 are positioned adjacent to each other. Cutting faces F1 and F2 having inclination angles different from each other are formed at each edge of the cutting blades 13 and 14, as shown in FIG. 14.

The grooved noodles 1 having the cross-sectional shape as shown in FIGS. 1 and 2 are manufactured by passing noodle dough between the edges of the cutting blades 13 and 14 with the cutting blades 13 and 14 being rotated by the rotary shafts 11 and 12 in the opposite directions to each other. In the manufacture, the first sides L11 and L12 and the second sides L21 and L22 of the grooves G1 and G2 in which the inclination angle varies in two steps are formed by means of the cutting faces F1 and F2 of the cutting blades 13 and 14.

The grooved noodle 1 can be manufactured by, instead of the cutting blades, using a die having a die orifice corresponding to the cross-sectional shape of the grooved noodle 1 to extrude noodle dough.

In the grooved noodle 1 according to Embodiment 1 described above, the first sides L11 and L12 of each of the grooves G1 and G2 extend while being inclined to each other so that an interval therebetween narrows at a side closer to the terminal end P of the groove. However, the invention is not limited thereto and the first sides may extend in parallel with each other as first sides L11 and L12 in a grooved noodle 2 shown in FIG. 5. Second sides L21 and L22 are respectively connected with ends of the first sides L11 and L12 in bending directions so as to come closer to each other, and an intersection between the second sides L21 and L22 forms a terminal end P of the groove.

The grooved noodle 2 having the forgoing structure makes it possible to achieve the reduction in cooking time as well as an excellent texture and an excellent external appearance after cooking, similarly to the above-described grooved noodle 1.

### Embodiment 2

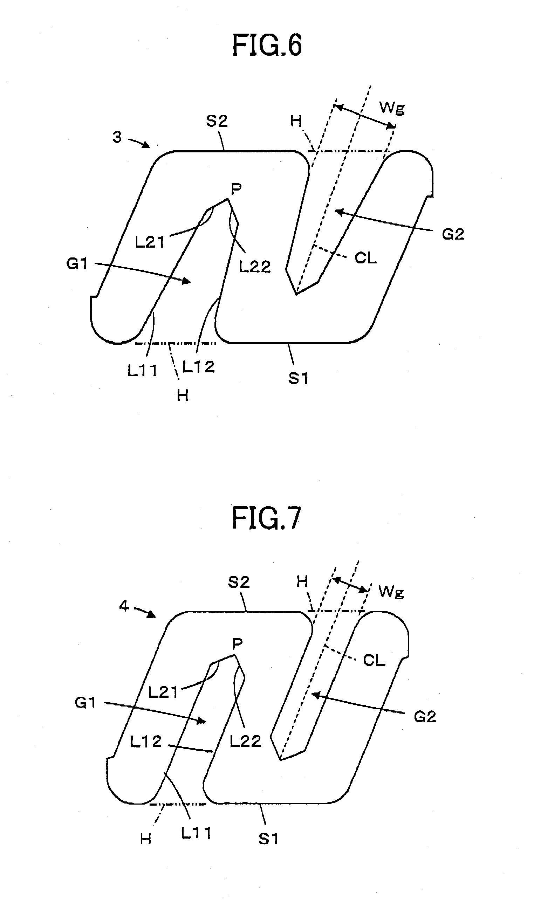

While in the grooved noodle 1 according to Embodiment 1 described above, the grooves G1 and G2 respectively extend from the opposite corners C1 and C2 of the parallelogram of the basic contour of the noodle string toward the inside of the noodle string, the grooves may be formed to extend from opposite sides S1 and S2 of a parallelogram of the basic contour of a noodle string toward the inside of the noodle string as grooves G1 and G2 in a grooved noodle 3 of Embodiment 2 shown in FIG. 6.

Also in this case, in the cross section of the noodle string, the grooves G1 and G2 are at symmetrical positions with respect to the center point of the parallelogram, have a polygonal shape in which the inclination angle varies in two steps due to first sides L11 and L12 and second sides L21 and L22, and have a depth larger than 1/2 of the width of the noodle string in the groove-formed direction.

The grooved noodle 3 having the forgoing structure makes it possible to achieve the reduction in cooking time as well as an excellent texture and an excellent external appearance after cooking, similarly to the above-described grooved noodle 1.

In the grooved noodle 3 shown in FIG. 6, the first sides L11 and L12 of each of the grooves G1 and G2 extend while being inclined to each other so that an interval therebetween narrows at a side closer to a terminal end P of the groove. However, the invention is not limited thereto and the first sides may extend in parallel with each other as first sides L11 and L12 in a grooved noodle 4 shown in FIG. 7. Also in this case, second sides L21 and L22 are respectively connected with ends of the first sides L11 and L12 in bending directions so as to come closer to each other, and an intersection between the second sides L21 and L22 forms a terminal end P of the groove. In other words, grooves G1 and G2 have a polygonal shape in which the inclination angle varies in two steps.

The grooved noodle 4 having the forgoing structure makes it possible to achieve the reduction in cooking time as well as an excellent texture and an excellent external appearance after cooking, similarly to the above-described grooved noodle 3.

### Embodiment 3

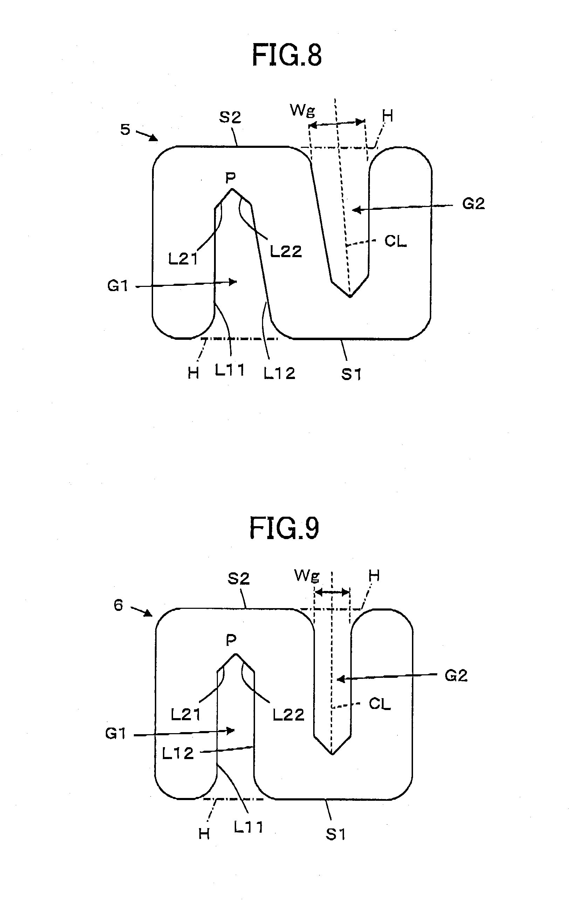

While in the grooved noodles 1 to 4 according to Embodiments 1 and 2 described above, the noodle string has the basic contour of substantially parallelogrammic shape, a noodle string may have the basic contour of rectangular shape, for instance, as in a grooved noodle 5 of Embodiment 3 shown in FIG. 8.

In the cross section of the noodle string, grooves G1 and G2 extend from opposite sides S1 and S2 of the rectangle that is the basic contour of the noodle string toward the inside of the noodle string. The grooves G1 and G2 have a polygonal shape in which the inclination angle varies in two steps due to first sides L11 and L12 and second sides L21 and L22, and have a depth larger than 1/2 of the width of the noodle string in the groove-formed direction.

The grooved noodle 3 having the forgoing structure makes it possible to achieve the reduction in cooking time as well as an excellent texture and an excellent external appearance after cooking, similarly to the above-described grooved noodle 1.

In the grooved noodle 5 shown in FIG. 8, the first sides L11 and L12 of each of the grooves G1 and G2 extend while being inclined to each other so that an interval therebetween narrows at a side closer to a terminal end P of the groove. However, the invention is not limited thereto and the first sides may extend in parallel with each other as first sides L11 and L12 in a grooved noodle 6 shown in FIG. 9. Also in this case, second sides L21 and L22 are respectively connected with ends of the first sides L11 and L12 in bending directions so as to come closer to each other, and an intersection between the second sides L21 and L22 forms a terminal end P of the groove. In other words, grooves G1 and G2 have a polygonal shape in which the inclination angle varies in two steps.

The grooved noodle 6 having the forgoing structure makes it possible to achieve the reduction in cooking time as well as an excellent texture and an excellent external appearance after cooking, similarly to the above-described grooved noodle 5.

While in each of the grooved noodle 5 shown in FIG. 8 and the grooved noodle 6 shown in FIG. 9, the grooves G1 and G2 respectively extend from the opposite sides S1 and S2 of the rectangle that is the basic contour of the noodle string toward the inside of the noodle string, the grooves G1 and G2 may be formed to extend from opposite corners of the rectangle that is the basic contour of a noodle string toward the inside of the noodle string in the same manner.

Besides Udon (Japanese wheat noodles), Soba (Japanese buckwheat noodles), Hiyamugi (Japanese wheat noodles) and Chinese noodles, the present invention may be applied to various kinds of noodles including pasta.

The present invention is also applicable to various types of noodles, such as raw noodles, boiled noodles, steamed noodles and instant noodles, in addition to dry noodles.

### EXAMPLES

### Manufacture Examples 1 to 5

A mixture obtained by adding 36 parts by weight of 10% salt water to 100 parts by weight of all-purpose flour was mixed in a pin mixer for 10 minutes, and the resultant noodle dough was rolled with rolls at a reduction ratio of 30 to 50% to a final noodle sheet thickness of 2.4 mm by an ordinary method. This noodle sheet was processed with cutting blades to manufacture several types of grooved noodles, as Manufacture Examples 1 to 5, having cross-sectional shapes similar to that in FIG. 2 but in such a manner that the grooved noodles had different attributes of the angle A1 between the first side L11 and the second side L21 of the groove (identical to the angle between the sides L12 and L22), the angle A2 between the sides L21 and L22, and the ratio of the thickness Wn of the noodle string at a portion between the two grooves to the groove opening width Wg as shown in Table 1. Thus obtained noodles were dried under moderate temperature and humidity conditions to a moisture content of 13%. In all the types of grooved noodles, the grooves had a depth larger than 1/2 of the width of the noodle string in the groove-formed direction.

### Comparative Example 1

Grooved noodles were manufactured to have a cross-sectional shape similar to that in FIG. 2 like Manufacture Examples 1 to 5 but have V-shaped grooves (in which the angle of each terminal end is 15 degrees). Thus obtained noodles were dried under moderate temperature and humidity conditions to a moisture content of 13%. In this type of grooved noodles, the grooves had a depth larger than 1/2 of the width of the noodle string in the groove-formed direction.

Each of the grooved noodles of Manufacture Examples 1 to 5 and Comparative Example 1 was divided into 100 g portions, and boiled in hot water at 100°C. The time taken for noodles to be completely boiled and the external appearance and texture of the boiled noodles were evaluated by 10 evaluators based on the following evaluation criteria. The averages of evaluation results are shown in Table 1. Note that the boiling time of normal noodles without grooves as manufactured from a 2.4 mm thick noodle sheet is 600 seconds.

### Evaluation criteria of external appearance

4: A smooth external appearance equivalent to noodles without grooves
3: A substantially smooth external appearance almost equivalent to noodles without grooves
2: An external appearance slightly exhibiting irregularities and rather insufficient in smoothness
1: An external appearance exhibiting irregularities and insufficient in smoothness

### Evaluation criteria of texture

4: An excellent texture equivalent to noodles without grooves
3: A good texture almost equivalent to noodles without grooves
2: A relatively poor texture due to being slightly softer than noodles without grooves
1: A poor texture due to being softer than noodles without grooves
[Table 1]

**Table 1**

| | Manufacture example 1 | Manufacture example 2 | Manufacture example 3 | Manufacture example 4 | Manufacture example 5 | Comparative example 1 |
|---|---|---|---|---|---|---|
| A1 (deg) | 100 | 135 | 150 | 175 | 150 | - |
| A2 (deg) | 170 | 100 | 70 | 20 | 70 | - |
| Wn/Wg | 1/1.1 | 1/1.1 | 1/1.1 | 1/1.1 | 1/0.6 | 1/1.1 |
| Boiling time (sec) | 300 | 330 | 375 | 485 | 462 | 498 |
| External appearance of noodles | 2.3 | 3.8 | 3.3 | 2.3 | 2.6 | 1.8 |
| Texture of noodles | 2.5 | 4.0 | 3.4 | 2.2 | 1.9 | 1.8 |

### REFERENCE SIGNS LIST

1 to 6 grooved noodle; 11, 12 rotary shaft; 13, 14 cutting blade; G1, G2 groove; L11, L12 first side; L21, L22 second side; P terminal end of groove; H opening plane of groove; CL centerline of groove; C1, C2 corner; Wg groove opening width; Wn thickness of noodle string; Dg depth of groove; Dn width of noodle string; F1, F2 cutting face; S1, S2 side

## Claims

1. A grooved noodle, wherein a cross section of a noodle string has a parallelogrammic or rectangular basic contour;
wherein two grooves extending along a direction of the noodle string are provided at symmetrical positions with respect to a center of the cross section of the noodle string;
wherein in the cross section of the noodle string, each of the two grooves has a pair of first sides that face each other and extend from an opening plane of each of the two grooves toward an inside of the noodle string, and a pair of second sides that respectively extend from ends of the pair of first sides in bending directions so as to come closer to each other and are interconnected to form a terminal end of each of the two grooves; and
wherein in the cross section of the noodle string, a distance from the terminal end to the opening plane of each of the two grooves is larger than 1/2 of a width of the noodle string in a grooving direction.

2. The grooved noodle according to claim 1, wherein in the cross section of the noodle string, a ratio of a thickness of the noodle string at a portion between the two grooves to an opening width of each of the two grooves is 1.0:0.7 to 1.3.

3. The grooved noodle according to claim 1 or 2, wherein in the cross section of the noodle string, an angle of the terminal end of each of the two grooves is 45 to 100 degrees.

4. The grooved noodle according to claim 3, wherein in the cross section of the noodle string, a bending angle between each of the pair of first sides and a corresponding one of the pair of second sides is 110 to 170 degrees.

5. The grooved noodle according to any one of claims 1 to 4, wherein in the cross section of the noodle string, a total area of the two grooves is 15 to 65% of an area of the basic contour of the noodle string given that the two grooves are not present.

6. The grooved noodle according to any one of claims 1 to 5, wherein a thickness of the noodle string is 0.3 mm to 1.5 mm in a portion covering about 80% of a constituent area from the center of the cross section of the noodle string.

7. The grooved noodle according to any one of claims 1 to 6, wherein in the cross section of the noodle string, the two grooves respectively extend from opposite corners of the basic contour of the noodle string toward the inside of the noodle string.

8. The grooved noodle according to any one of claims 1 to 6, wherein in the cross section of the noodle string, the two grooves respectively extend from opposite sides of the basic contour of the noodle string toward the inside of the noodle string.

9. The grooved noodle according to any one of claims 1 to 8, wherein in the cross section of the noodle string, the pair of first sides of each of the two grooves are inclined such that an interval between the pair of first sides narrows at a side closer to the terminal end.

10. The grooved noodle according to any one of claims 1 to 8, wherein in the cross section of the noodle string, the pair of first sides of each of the two grooves extend in parallel with each other.
